Europäisches Patentamt

European Patent Office

Office européen des brevets

(19)

(11) EP 1 447 816 A1

(12) EUROPEAN PATENT APPLICATION
published in accordance with Art. 158(3) EPC

(43) Date of publication:
18.08.2004 Bulletin 2004/34

(51) Int Cl.⁷: H01B 1/06, H01M 8/02,
H01M 4/86, H01M 8/10

(21) Application number: 02802058.4

(22) Date of filing: 23.10.2002

(86) International application number:
PCT/JP2002/011004

(87) International publication number:
WO 2003/036655 (01.05.2003 Gazette 2003/18)

(84) Designated Contracting States:
AT BE BG CH CY CZ DE DK EE ES FI FR GB GR
IE IT LI LU MC NL PT SE SK TR

(30) Priority: 25.10.2001 JP 2001328131
28.02.2002 JP 2002053552
25.09.2002 JP 2002278321

(71) Applicant: Ube Industries, Ltd.
Ube-shi, Yamaguchi-ken 755-8633 (JP)

(72) Inventors:
• TAKAGI, Jun c/o Ube Industries, Ltd.
Ichihara-shi, Chiba 290-0045 (JP)

• OHYA, Shusei c/o Ube Industries, Ltd.
Ichihara-shi, Chiba 290-0045 (JP)
• FUJII, Yuuichi c/o Ube Industries, Ltd.
Ichihara-shi, Chiba 290-0045 (JP)

(74) Representative:
Forstmeyer, Dietmar, Dr. rer. nat., Dipl.-Chem. et
al
Patentanwaltskanzlei Dr. Dietmar Forstmeyer,
Bereiteranger 15
81541 München (DE)

(54) POLYMER ELECTROLYTE SOLUTION FOR MANUFACTURING ELECTRODE FOR FUEL CELL

(57) A polymer electrolyte solution useful in the fabrication of solid polymer electrolyte fuel cell electrodes, characterized by comprising a solvent containing a hydrophilic and high-boiling polar solvent, preferably a mixed solvent mainly comprising the polar solvent and water, having dissolved therein a perfluorocarbon sulfonic acid polymer.

EP 1 447 816 A1

**Description**

Technical Field:

This invention relates to a polymer electrolyte solution useful to make an electrode of a solid polymer electrolyte fuel cell.

Background Art:

In recent years, development and practical application of fuel cells have been proceeding. For example, a solid polymer electrolyte fuel cell has the following structure. A solid polymer electrolyte membrane made of a perfluorocarbon resin, etc. is sandwiched between a pair of 0.1 to 0.3 mm thick porous carbon sheets made of carbon fiber paper having carried on the surface thereof a platinum electrode catalyst to form a pair of gas diffusion electrodes. A 1 to 3 mm thick dense carbon plate with flow channels for gas feed is provided on each gas diffusion electrode as a separator to make up a fuel cell module. In the case of a phosphoric acid fuel cell, a fuel cell module is composed of an electrolyte layer made of a phosphoric acid holder holding phosphoric acid, a 0.1 to 0.3 mm thick porous carbon sheet made of carbon fiber paper stacked on both sides of the electrolyte layer and having carried on the surface thereof a platinum electrode catalyst to form a pair of gas diffusion electrodes, and a 1 to 3 mm thick separator with flow channels provided on the outer side of the gas diffusion electrodes.

A perfluorocarbon sulfonic acid polymer typically exemplifies the perfluorocarbon resin. The affinity of a perfluorocarbon sulfonic acid polymer to an organic solvent varies with the mole number of sulfonic acid groups. This ion exchange resin is known soluble in lower aliphatic alcohols, such as 2-propanol, in a region exhibiting a large exchange capacity (see JP-B-48-13333).

Such an ion exchange resin solution is commercially available under the trade name, e.g., of Nafion solution (solution in a mixed solvent of a lower aliphatic alcohol and water) from Du Pont, U.S.A. and is commonly and widely used in the preparation of electrodes. However, a film formed of the solution, being brittle and poor in adhesion, is not favorable from the standpoint of practical use of fuel cells, particularly from the viewpoint of electrode durability in actual use of fuel cells.

Although a perfluorocarbon sulfonic acid polymer film has been extensively studied from the aspects of form, physical properties, and chemical properties (for example, solubility), it can be hardly said that the relationship between film forming conditions and the physical properties and the structure has been elucidated sufficiently.

Disclosure of the Invention:

An object of the present invention is to solve the above problems and provide a polymer electrolyte solution useful in the preparation of electrodes of a solid polymer electrolyte fuel cell and capable of making highly durable electrodes.

Another object of the invention is to provide a polymer electrolyte membrane and a fuel cell electrode prepared by using the polymer electrolyte solution, a membrane/electrode assembly prepared by using the electrode, and a fuel cell.

The present inventors have conducted intensive investigations into perfluorocarbon sulfonic acid polymers, paying attention to the chemical structure, the affinity between the polymer segments and solvents, vaporization behavior of solvents in film formation, and the process of higher order structure formation. They have found as a result that a solution of a perfluorocarbon sulfonic acid polymer in a mixed solvent mainly comprising a hydrophilic and high-boiling polar solvent and water is capable of forming a thin membrane that has high strength and good adhesion to a substrate, and chemical resistance against various solvents including water.

The present invention has been reached based on the above finding and provides a polymer electrolyte solution characterized by comprising a solvent containing a hydrophilic and high-boiling polar solvent, preferably a mixed solvent mainly comprising the polar solvent and water, having dissolved therein a perfluorocarbon sulfonic acid polymer.

The present invention also provides a polymer electrolyte membrane prepared by using the polymer electrolyte solution.

The present invention also provides a gas diffusion electrode for a polymer electrolyte fuel cell characterized by comprising a structure made of a porous carbon substrate having fine metal particles dispersed therein, the structure having the surface thereof coated with a polymer electrolyte membrane prepared from the polymer electrolyte solution.

The present invention also provides a gas diffusion electrode for a polymer electrolyte fuel cell characterized by being prepared by using carbon powder or carbon fiber, fine metal particles, and the polymer electrolyte solution.

The present invention also provides a polymer electrolyte membrane/gas diffusion electrode assembly characterized by being prepared by using the gas diffusion electrode for a polymer electrolyte fuel cell.

The present invention also provides a fuel cell characterized by being prepared using the polymer electrolyte membrane/gas diffusion electrode assembly as a constituent element.

A high performance electrode offering a three-dimensional electrode reaction site can be prepared by coating a porous carbon substrate having carried thereon fine noble metal particles with an electrolyte membrane by using the polymer electrolyte solution according to the invention. The polymer electrolyte solution of the invention, when applied to a convention method using a paste mainly comprising conductive carbon particles, fine noble metal particles, and an electrolyte solution, provides a highly durable electrode with ease.

Brief Description of the Drawings:

Fig. 1 is a scanning electron micrograph of the surface of a typical example of a porous carbon substrate used in the present invention.

Fig. 2 is a scanning electron micrograph of a cut area of the porous carbon substrate shown in Fig. 1.

Fig. 3 is a scanning electron micrograph of the surface of the platinum-on-porous carbon membrane structure prepared in Reference Example 2 and having received no post heat treatment.

Fig. 4 is a scanning electron micrograph of the surface of the platinum-on-porous carbon membrane structure prepared in Reference Example 2 and having received a post heat treatment at 1000°C for 1.5 hours as described in Reference Example 2.

Fig. 5 is the loss tangent profile of the samples described in Example 2-(1).

Fig. 6 is the X-ray profile of the samples described in Example 2-(2).

Fig. 7 is a transmission electron micrograph of the sample described in Example 2-(3).

Best Mode for Carrying out the Invention:

The perfluorocarbon sulfonic acid polymer used in the present invention is a perfluorocarbon vinyl ether copolymer having a polytetrafluoroethylene main chain and a sulfo-containing side chain. An example of its chemical formulae is shown below.
wherein m is a number of 5 to 15; and n is a number of 50 to 500.

The hydrophilic and high-boiling polar solvent which can be used in the invention includes aprotic solvents, such as N,N-dimethylformamide and dimethyl sulfoxide, and ether solvents, such as bis(2-methoxyethyl) and 1,4-dioxane. N,N-dimethylformamide is particularly preferred of them.

The polar solvent-containing solvent used in the invention may consist solely of the polar solvent but is preferably a mixed solvent containing the polar solvent and water as main components.

The mixed solvent preferably contains the polar solvent as a major component and 2.5 to 50% by weight of water.

The mixing ratio of the polar solvent to water (polar solvent/water) in the mixed solvent is preferably 40/1 to 1/2.

The concentration of the perfluorocarbon sulfonic acid polymer in the polymer electrolyte solution is preferably, but not limited to, 0.5 to 30% by weight.

The polymer electrolyte membrane according to the present invention is prepared using the above-described polymer electrolyte solution according to the invention.

Formation of the polymer electrolyte membrane from the polymer electrolyte solution is achieved by casting or like methods. Formation of the polymer electrolyte membrane by casting is generally carried out by spreading the polymer electrolyte solution of the invention on a substrate made of aluminum, glass, etc. followed by heat drying under reduced pressure.

The polymer electrolyte membrane according to the invention is infusible and insoluble in water and alcohols.

The gas diffusion electrode according to the present invention for a polymer electrolyte fuel cell is a structure made of a porous carbon substrate having fine metal particles dispersed therein and having the surface thereof coated with a polymer electrolyte membrane prepared from the above-described polymer electrolyte solution.

The porous carbon substrate is preferably a porous carbon membrane structure having a porous structure with fine interconnecting pores and with a smooth surface except for the surface openings.

The term "porous structure with fine interconnecting pores" as used herein means a structure in which fine pores non-linearly extend from an arbitrary surface of the structure to make narrow passageways leading to the other surface (so-called open cells), and the walls between adjacent passageways connect to one another.

When gas is supplied to the porous carbon membrane structure, gas is non-linearly diffused therein through the non-linearly extending narrow passageways. Because the porous carbon membrane structure has a smooth surface except for the pores extending from the inside of the membrane and open on the surface of the membrane, when a layer, such as a separator, is superposed thereon, a planar contact is established in the interface therebetween.

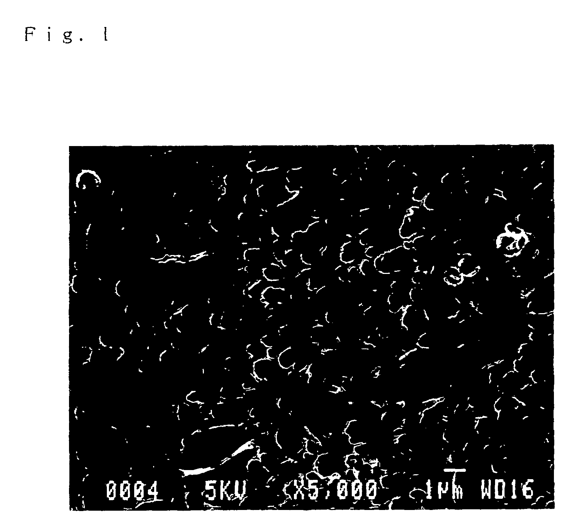

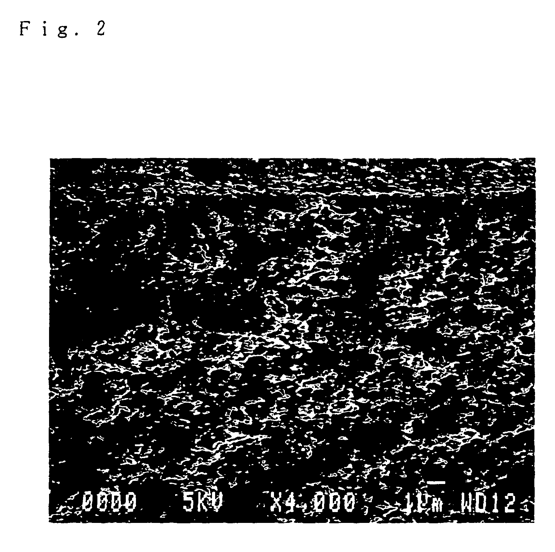

To illustrate the porous structure and the surface smoothness of the porous carbon membrane structure in more detail, scanning electron micrographs (SEM photographs) taken of the surface and a cut area of a typical porous carbon membrane structure are shown in Figs. 1 and 2, respectively. Since the porous carbon membrane structure has surface smoothness except for the surface openings as shown in Figs. 1 and 2, it provides a planar contact in the interface in a cell laminate.

The average pore size on the surface of the porous carbon membrane structure is preferably 0.05 to 10 μm, still preferably 0.05 to 2 μm. An average surface pore size smaller than 0.05 μm causes a pressure loss, resulting in inefficient gas diffusion. An average surface pore size greater than 10 μm tends to allow gas to flow linearly, which makes it difficult to uniformly distribute the gas over a broad area.

The porous carbon membrane structure preferably has a void of 25 to 85%, particularly 30 to 70%. A void less than 25% results in reduction of the amount of gas diffused. A void exceeding 70% unfavorably reduces the mechanical strength of the membrane.

The porous carbon membrane structure preferably has a graphitization degree of 20% or higher, particularly 60% or higher, especially 90% or higher. With a graphitization degree of 20% or higher, particularly 60% or higher, the membrane will have increased mechanical strength and improved flexibility. The electrical and thermal conductivities are also improved.

The porous carbon membrane structure is suitably produced by carbonizing a membrane made of a highly heat resistant polymer in an anaerobic atmosphere, the highly heat resistant polymer-made membrane having a porous structure with fine interconnecting pores and a smooth surface except the openings. Use of a highly heat resistant polymer is advantageous in that the porous structure can be retained when heated.

The highly heat resistant polymer is not particularly limited as long as it is capable of forming a porous membrane with fine interconnecting pores and retaining such a porous structure after heating for carbonization. Suitable polymers include polyimide resins, cellulosic resins, furfural resins, and phenolic resins. In particular, aromatic polyimides are preferred for ease of carbonization into a mechanically strong porous carbon membrane structure. The terminology "aromatic polyimides" as used herein is intended to include polyamic acids that are precursors of aromatic polyimides and partially imidized polyamic acids.

The highly heat resistant polymer membrane is suitably prepared by a phase inversion technique using a polymer solution. In this technique, a polymer solution in an organic solvent is cast on a carrier (e.g., a glass plate). The cast film is immersed in a non-solvent for the polymer, such as an organic solvent or water, that is compatible with the organic solvent of the polymer solution. As a result, the solvent/non-solvent exchange occurs to cause phase separation thereby to form fine pores. However, a general phase inversion process results in formation of a dense layer on the surface of the porous membrane.

The phase inversion process described in JP-A-11-310658 and JP-A-2000-306568, the disclosures of which are herein incorporated by reference, is a preferred technique for easily obtaining a porous polymer membrane with fine interconnecting pores. This process involves solvent/non-solvent exchange rate control with a solvent/non-solvent exchange rate regulatory material.

More specifically, a cast membrane with a smooth surface is prepared from a polymer solution. A solvent/non-solvent exchange rate regulatory material (a porous film) is superposed on the cast membrane. The resulting laminate is brought into contact with a non-solvent to cause phase separation thereby precipitating a porous polymer membrane while forming fine pores. The porous polymer membrane prepared by this process maintains the surface smoothness possessed by the original cast membrane except for the surface openings. Thus, a porous polymer membrane (highly heat resistant polymer membrane) having a porous structure with interconnecting pores and a smooth surface except the openings can easily be obtained.

The resulting highly heat resistant polymer membrane is carbonized by heating in an anaerobic atmosphere into the aforementioned porous carbon membrane structure having a porous structure with fine interconnecting pores and a smooth surface except for the openings.

The anaerobic atmosphere preferably includes, but is not limited to, an inert gas atmosphere, such as a nitrogen gas, argon gas or helium gas atmosphere, and a vacuum atmosphere.

In performing carbonization, an abrupt temperature rise can cause decomposition products to dissipate or the carbon matter to evaporate, which can result in a reduced carbon yield or cause structural defects. Therefore, carbonization is preferably effected slowly by increasing the heating temperature at a sufficiently low rate, such as 20°C/min or lower, particularly about 1 to 10°C/min. The heating temperature and time are not limited as long as the polymer membrane is sufficiently carbonized. Taking into consideration the pyrolysis behavior of a precursor resin and electron conductivity, it is recommended to carry out carbonization in a temperature range from 1000° to 3500°C. In order to obtain a porous carbon membrane structure having an increased graphitization degree and thereby exhibiting improved mechanical strength, electrical conductivity, and thermal conductivity, a preferred temperature range is from 2400° to 3500°C, particularly 2600° to 3000°C, and a preferred heating time is 20 to 180 minutes at temperatures within the preferred temperature range.

Pressure application during carbonization is preferred for increasing the graphitization degree to obtain a porous carbon membrane structure with increased mechanical strength and improved electrical and thermal conductivities. Pressure application is effective to suppress shape change due to thermal shrinkage and the like during carbonization and to enhance orientation of the carbonaceous moiety while being carbonized thereby to accelerate graphitization. As a result, a porous carbon membrane structure having high mechanical strength and high electrical and thermal conductivities can be obtained. The pressure to be applied is preferably 1 to 250 MPa, still preferably 10 to 250 MPa. Pressure can be applied suitably by means of a high temperature compressor or a hot isotactic press (HIP).

For the purpose of accelerating graphitization, it is advisable to incorporate a compound effective in graphitization acceleration, such as a boron compound, into the highly heat resistant polymer membrane. Fine powder of such a compound can previously be uniformly dispersed in the polymer solution. The resulting polymer solution is processed as described above to provide a highly heat resistant polymer membrane having a porous structure and having the compound uniformly dispersed therein.

A porous carbon membrane structure having a desired thickness may be obtained by stacking a plurality of porous carbon membranes separately prepared by carbonization of highly heat resistant polymer membranes. This method is not recommended, however, because the stack of membranes has an interface inside. This means that control on contact resistance at the interface is required, which makes handling of the membranes complicated. A plurality of porous carbon membranes could be stacked via an adhesive, but the adhesive can reduce fuel cell performance. Porous carbon membranes may be stacked via a phenolic adhesive, and the stack may be re-heated to carbonize the adhesive to obtain an integral structure. However, this method is not preferred in view of involvement of complicated handling. On the other hand, a method in which a stack of a plurality of the highly heat resistant polymer membranes is carbonized in an anaerobic atmosphere is preferred for obtaining an integrally carbonized porous carbon membrane structure. According to this method, a porous carbon membrane structure of a desired thickness can be obtained from a plurality of thin highly heat resistant polymer membranes of a kind.

The porous carbon membrane structure is preferably a hydrophilic one having a functional group introduced onto the surface thereof.

The functional groups to be introduced include a hydroxyl group, a carboxyl group, and a ketone group. A hydroxyl group and a carboxyl group are preferred.

The amount of the functional group to be introduced is not particularly limited. Where metal is to be supported via metal complex ions, the amount is preferably 1 to 5 times, particularly 1 to 3 times, the desired amount of the metal to be supported.

Introduction of the functional group onto the surface of the porous carbon membrane structure can be achieved by, for example, oxidation with an acid solvent, treatment with hydrogen peroxide, or a high temperature treatment in air in the presence of water vapor.

The structure made of the porous carbon substrate having fine metal particles dispersed therein which can be used in the present invention is a structure made of the porous carbon substrate having at least one kind of fine metal particles dispersed therein.

The fine metal particles preferably have an average particle size of 5 nm or smaller and a maximum particle size of 15 nm or smaller, preferably an average particle size of 3 nm or smaller and a maximum particle size of 10 nm or smaller.

The fine metal particles are preferably fine noble metal particles. The noble metal includes platinum, palladium, and nickel, with platinum being preferred.

The fine metal particles can be dispersed in the porous carbon substrate by, for example, vapor phase deposition such as vacuum evaporation, or by using a solution of a precursor of the metal. For example, the porous carbon membrane structure is immersed in a metal precursor solution followed by drying to have the metal precursor supported on the structure. The porous carbon membrane structure is then heat treated in an inert gas atmosphere to reduce the metal precursor, washed, and dried to obtain a metal-on-porous carbon membrane structure having fine metal particles dispersed therein.

The metal precursor solution is prepared by, for example, dissolving an acetylacetonatoplatinum complex in a water/methanol (1:1 by weight) mixed solvent preferably in a concentration of 0.1 to 5% by weight.

The heat treatment in an inert gas atmosphere is preferably carried out at 180° to 1000°C.

The porous carbon membrane structure to be used to make the metal-on-porous carbon membrane structure is preferably the above-described hydrophilic porous carbon membrane structure having a functional group introduced to the surface thereof In this case, the metal-on-porous carbon membrane structure is prepared by exchanging the functional group of the hydrophilic porous carbon membrane structure for a metal complex cation, followed by reduction. The metal complex cation is preferably a noble metal complex cation.

The ion exchange between the function group of the hydrophilic porous carbon membrane structure and the metal complex cation is performed by, for example, immersing the hydrophilic porous carbon membrane structure in a solution of a metal complex for an appropriate period of time and washing with pure water.

After the ion exchange between the function group of the hydrophilic porous carbon membrane structure and the metal complex cation, the metal complex cation is reduced by, for example, chemical reduction or hydrogen reduction. A noble metal complex cation, in particular, can be reduced by heat treating in an inert gas atmosphere at a temperature higher than the decomposition temperature of the complex.

The structure comprising the porous carbon substrate having fine metal particles dispersed therein is coated with an electrolyte membrane by using the polymer electrolyte solution according to the present invention. The coating can be carried out by, for example, immersing the metal-on-porous carbon membrane structure in the polymer electrolyte solution of the present invention.

Since the polymer electrolyte fuel cell gas diffusion electrode of the present invention has a large number of fine interconnecting pores, it provides a wider surface area for carrying fine metal particles than a carbon fiber paper structure that is a commonly employed electrode substrate. Accordingly, the porous carbon membrane structure is suitable as a high performance fuel cell electrode substrate which can afford a three-dimensionally and uniformly broadened site for electrode reaction.

The polymer electrolyte fuel cell gas diffusion electrode of the present invention can also be prepared by making use of the polymer electrolyte solution of the invention in accordance with a conventional method using a paste mainly comprising carbon powder or fiber, fine metal particles (preferably fine noble metal particles), and an electrolyte solution.

The polymer electrolyte membrane/gas diffusion electrode assembly of the present invention is a membrane/ electrode assembly prepared by using the polymer electrolyte fuel cell gas diffusion electrode of the present invention.

The fuel cell of the present invention has the polymer electrolyte membrane/gas diffusion electrode assembly of the present invention as a constituent element.

The fuel cell of the present invention can be produced in a usual manner, except for using the polymer electrolyte membrane/gas diffusion electrode assembly of the present invention. For instance, the solid polymer electrolyte fuel cell can be manufactured by sandwiching the above-described membrane/electrode assembly between general fuel cell separators each made of a carbon plate with fuel gas flow channels on one side thereof.

The present invention will now be illustrated in greater detail with reference to Examples, but it should be understood that the invention is not construed as being limited thereto. In Examples, air permeability (gas transmission rate), void, average pore size, graphitization degree, and cell performance were measured in accordance with the following methods.

1) Air permeability

Measured in accordance with JIS P8117 with a Gurley densometer (B type, from Toyo Seiki Kogyo Co., Ltd.). A sample membrane was attached to a circular opening of a cylinder having a diameter of 28.6 mm and an area of 645 mm$^2$, and air in the cylinder was filtered through the membrane under a pressure of the inner cylinder weighing 567 g. The time required for 100 ml of air to pass through the membrane was measured to obtain a Gurley porosity.

2) Void rate

A cut piece of a sample membrane was measured in thickness, area, and weight. A void was obtained from the basis weight according to the following equation. In equation, S is the membrane area; d is the membrane thickness; W is the weight measured; and D is the density. The aromatic polyimide used had a density of 1.34. The density of prepared carbon membrane structures was calculated for every sample taking the graphitization degree obtained by the following method into consideration.

$$\text{Void (\%)} = [1 - W/(S \times d \times D)] \times 100$$

3) Average pore size

An SEM photograph was taken of the surface of a sample membrane. At least fifty openings were measured in area to obtain an average area per opening, from which an average diameter of the pores was calculated according to the following equation, taking the shape of the openings as a true circle. In the equation, Sa stands for an average area per opening.

$$\text{Average pore size} = 2 \times (Sa/\pi)^{1/2}$$

4) Graphitization degree

X-Ray diffraction was measured. The graphitization degree was obtained by the method of Ruland.

5) Cell performance

A sample fuel cell was tested using, as fuel gas, hydrogen having a humidity of 70% and air at a working temperature of 70°C and with a pressure difference of 0.1 kgf/cm² between fuel gas inlet and outlet. After the fuel cell operated for 1 hour steadily to confirm sufficiently stable operation, the current-voltage characteristics were measured.
The size of fine noble metal particles in the carbon membrane structure was measured through observation under a transmission electron microscope (TEM) and a scanning electron microscope (SEM).

REFERENCE EXAMPLE 1

Preparation of porous polyimide membrane:

3,3',4,4'-Biphenyltetracarboxylic acid dianhydride (s-BPDA) as a tetracarboxylic acid component and p-phenylenediamine (PPD) as a diamine component were dissolved in N-methyl-2-pyrrolidone (NMP) at a PPD/s-BPDA molar ratio of 0.999 and in a total monomer concentration of 8.5 wt%. Polymerization was conducted at 40°C for 15 hours to prepare a polyamic acid solution as a polyimide precursor. The solution viscosity of the polyamic acid solution was 600 Poise at 25°C measured with a cone and plate viscometer.
The polyamic acid solution was cast on a mirror finished stainless steel plate to a thickness of about 100 μm. A microporous polyolefin film having an air permeability of 550 sec/100 ml (U-pore UP2015, available from Ube Industries, Ltd.) was superposed on the polyamic acid solution cast film as a solvent/non-solvent exchange rate regulatory material without creating wrinkles. The laminated film structure was immersed in 1-propanol for 7 minutes to cause solvent/non-solvent exchange via the exchange rate regulatory material. As a result, there was precipitated a polyamic acid membrane having fine interconnecting pores and a smooth surface except for the openings.
The polyamic acid membrane was immersed in water for 10 minutes and peeled from the stainless steel plate and the solvent/non-solvent exchange rate regulatory material, fixed on a pin tenter, and heated in air at 400°C for 20 minutes to obtain a porous polyimide membrane. The resulting porous polyimide membrane had a degree of imidization of 70%, a thickness of 27 μm, an air permeability of 360 sec/100 ml, a void of 51%, and an average pore size of 0.17 μm.

Preparation of Pt-on-porous carbon membrane structure:

The porous polyimide membrane was carbonized in an inert gas stream by elevating the temperature up to 1400°C at a rate of 10°C/min and maintained at that temperature for 1.5 hours to obtain a porous carbon membrane structure. After temperature drop, the resulting porous carbon membrane structure (carbonized membrane) was immersed in a platinum precursor solution prepared by dissolving an acetylacetonatoplatinum complex in a 1:1 (by weight) water/methanol mixed solvent in a concentration of 1 wt% and dried as such at room temperature to have the platinum precursor carried thereon. The porous carbon membrane structure was heated in an inert gas atmosphere at 500°C to reduce the platinum precursor, thoroughly washed with a 7:3 (by weight) pure water/methanol mixed solvent, and dried to prepare a Pt-on-porous carbon membrane structure, which was found to have a thickness of 21 μm, an air permeability of 330 sec/100 ml, a void of 47%, an average pore size of 0.14 μm, and a graphitization degree of 23%.
Observation of the Pt-on-porous carbon membrane structure under a scanning electron microscope (SEM) and a transmission electron microscope (TEM) revealed that fine platinum particles were supported. The amount of platinum supported per cm² was found to be 0.02 mg from the results of ICP elemental analysis, the thickness of the porous carbon membrane, etc.

REFERENCE EXAMPLE 2

A porous carbon membrane structure (carbonized membrane) prepared in the same manner as in Reference Example 1 was immersed in a 70°C, 0.4 mol/l solution of potassium permanganate in a 35 wt% nitric acid aqueous solution for a prescribed period of time. The structure was thus oxidized to have functional groups such as a hydroxyl group and a carboxyl group introduced to its surface. The structure was thoroughly washed with distilled water and dried. The structure was immersed in a 3 g/l aqueous solution of tetraamineplatinum (II) chloride for at least 2 hours to have the platinum precursor supported thereon through ion exchange. The supported platinum precursor was reduced with a sodium boron hydride aqueous solution to obtain a Pt-on-porous carbon membrane structure. The resulting Pt-on-porous carbon membrane structure was found to have a thickness of 22 μm, an air permeability of 330 sec/100 ml, a void of 48%, an average pore size of 0.14 μm, and a graphitization degree of 21 %.

The platinum element of the Pt-on-porous carbon membrane structure was quantitatively determined by elemental analysis. As a result, an obvious correlation was found between the oxidation treating time of the porous carbon membrane structure and the amount of platinum of the Pt-on-porous carbon membrane structure as shown in Table I below.

TABLE 1

| Oxidation Time (hr) | Amount of Platinum (wt%) |
| --- | --- |
| 0 | 0.13 |
| 2 | 1.4 |
| 3 | 1.6 |
| 4 | 3.2 |

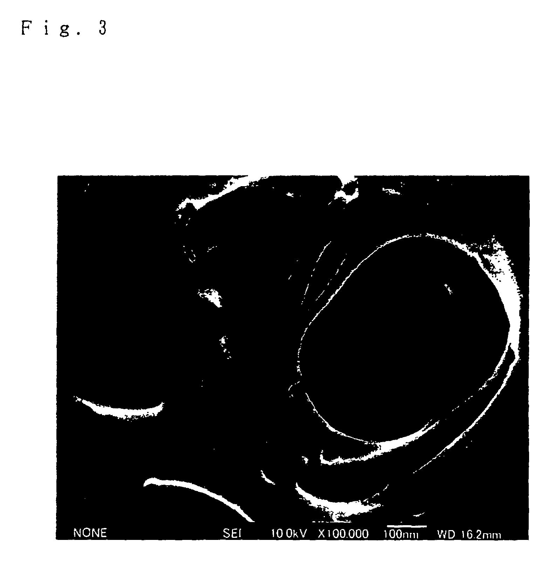

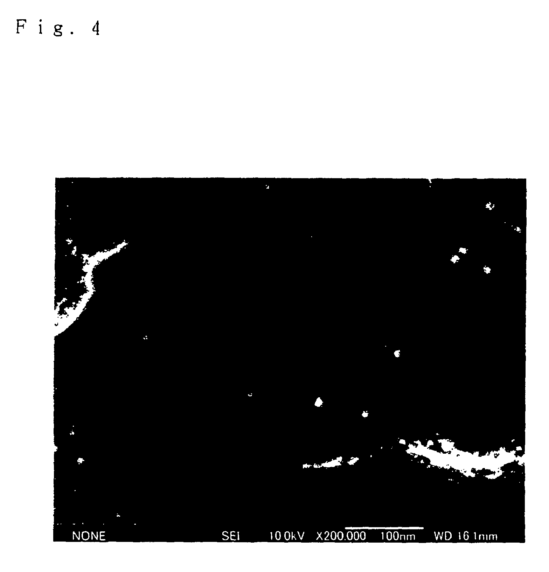

The Pt-on-porous carbon membrane structure was subjected to a post heat treatment in an inert gas atmosphere at various temperatures to see the influence on the platinum particle size. As a result of SEM and TEM observation, the Pt-on-porous carbon membrane structure having received no post heat treatment revealed substantially no particulate platinum, indicating that platinum atoms were uniformly and highly dispersed in the structure. As the heat treating temperature and time increased, fine platinum particles precipitated and gained in particle size. Fig. 3 is an SEM photograph taken of the surface of the Pt-on-porous carbon membrane structure having received no post heat treatment. Fig. 4 is an SEM photograph taken of the surface of the Pt-on-porous carbon membrane structure having been post heat treated at 1000°C for 1.5 hours.

Preparation and evaluation of polymer electrolyte membrane:

Polymer electrolyte membranes were prepared from various polymer electrolyte solutions and measured and tested as follows.

1) Solvent resistance

The membrane was immersed in water, an alcohol, a polar solvent, etc., and the behavior was observed with the naked eye.

2) Ionic conductivity

The membrane was sandwiched between Teflon (trade name) sheets integrated with the respective electrodes. An alternating current was applied between the electrodes to measure the resistance by alternating current impedance measurement. The ionic conductivity was obtained from the real impedance intersect of the Cole-Cole plot. The measurement was made at 50°C.

3) Solid viscoelasticity

Dynamic measurement (tensile mode) was made at a rate of temperature rise of 3°C/min, a frequency of 5 Hz, and a temperature range of -150 to 300°C.

EXAMPLE 1 (Preparation of handlable membrane)

A perfluorocarbon sulfonic acid polymer solution available from Du Pont (Nation 5012; polymer concentration: 5 wt%; solvent: methanol/isopropyl alcohol/water; 1100 EW (equivalent weight)) was evaporated in a vacuum evaporator to remove the main solvent, and the precipitated solid polymer was dried under reduced pressure at 100°C for 24 hours to recover deep red Nafion powder.

The resulting polymer powder was dissolved in N,N-dimethylformamide to prepare a perfluorosulfonic acid polymer solution having a resin content of 5 to 20 wt% (a polymer electrolyte solution according to the invention).

The solution was cast in an aluminum cap or a glass petri dish (substrate), dried under reduced pressure at 80 to 120°C. The dry film was released from the substrate to obtain a handlable polymer electrolyte membrane. All the resulting membranes did not disintegrate even when boiled in water for 12 hours.

COMPARATIVE EXAMPLE 1

The Nafion 5012 solution used in Example 1 was cast as such in an aluminum cup or a glass petri dish (substrate) and dried under reduced pressure under the same conditions as in Example 1. During the drying, the cast film disintegrated, failing to become a handlable membrane.

EXAMPLE 2 (Promotion of proton conductivity by addition of water to solvent)

A handlable polymer electrolyte membrane according to the invention was prepared in the same manner as in Example 1, except for replacing the solvent used in Example 1 (i.e., N,N-dimethylformamide) with a mixed solvent of N,N-dimethylformamide (DMF) and water at a mixing ratio varying from 2:1 to 1:2. All the resulting membranes neither re-dissolved in a solvent nor disintegrated irrespectively of the solvent composition.

In the measurement of solid viscoelasticity, it was confirmed that dispersion of the side chain due to the ionic region shifted toward the lower temperature side as the water content in the solvent increased.

In the measurement of ionic conductivity, the polymer electrolyte membrane prepared by using a 1:1 mixture of N,N-dimethylformamide and water showed the highest ionic conductivity.

To examine the influence of the rate of solvent evaporation, the polymer electrolyte membrane prepared by vacuum drying the polymer electrolyte solution at 80°C was compared with that prepared by vacuum drying at 120°C. As a result, the former membrane exhibited improved ionic conductivity.

To confirm the formation of a channel structure that contributes proton conductivity, the following measurements were conducted according to necessity.

(1) Measurement of dynamic solid viscoelasticity

A solid analyzer (RSA II, supplied by Rheometric Scientific FE Ltd.) was used. A sample with 0.1% strain was evaluated for dynamic solid viscoelasticity under conditions: a temperature range of from -150 to 300°C, a rate of temperature rise of 3°C/min, a frequency of 31.4 rad/sec (5 Hz), and an atmosphere of nitrogen.

The loss tangent profile of the sample prepared by using a 2:1 mixed solvent of $DMF:H_2O$ the sample prepared by using a 1:1 mixed solvent of $DMF:H_2O$, and the sample prepared by using a 1:2 mixed solvent of $DMF:H_2O$ is shown in Fig. 5.

(2) Wide angle X-ray scattering measurement

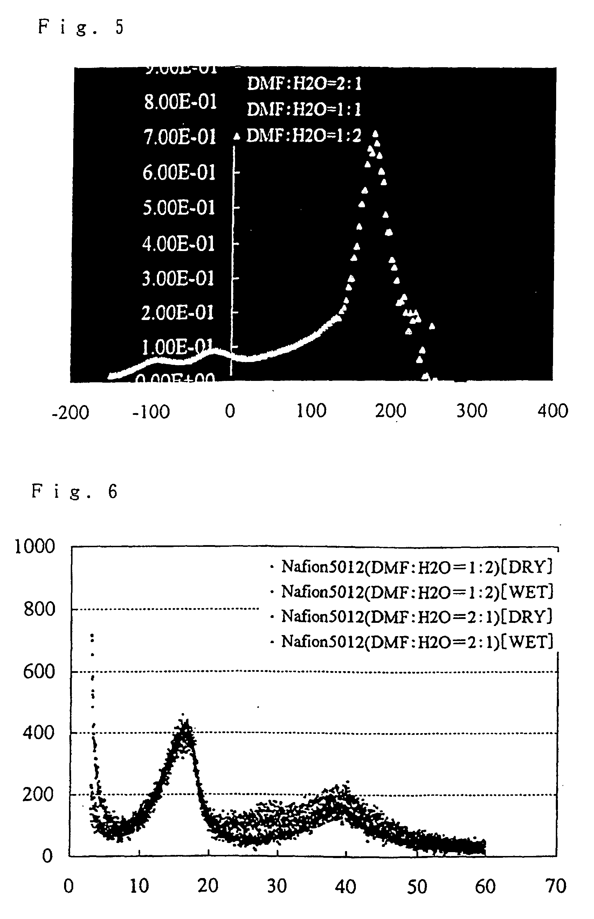

Measurements were performed in a transmission geometry using a rotating anode X-ray diffractometer RINT 2500 (available from Rigaku Corp.) under the following conditions. Scanning speed: 5°/min; scanning range: 3° to 60°; slits: DS/SS/RS=0.5°/0.5°/0.15 mm. A stack of an arbitrary number of sample membranes sealed in a polyethylene terephthalate (PET) bag was used as a specimen of X-ray scattering measurement. The X-ray profile of the PET bag was subtracted from the resulting X-ray profile of the specimen to obtain the X-ray profile of the polymer electrolyte membrane. The profiles of two samples: one prepared by vacuum drying a membrane formed by using a 1:2 mixed solvent of $DMF:H_2O$ (dry sample) and one prepared by immersing the same membrane in boiling water for 8 hours (wet sample) are shown in Fig. 6.

(3) TEM observation

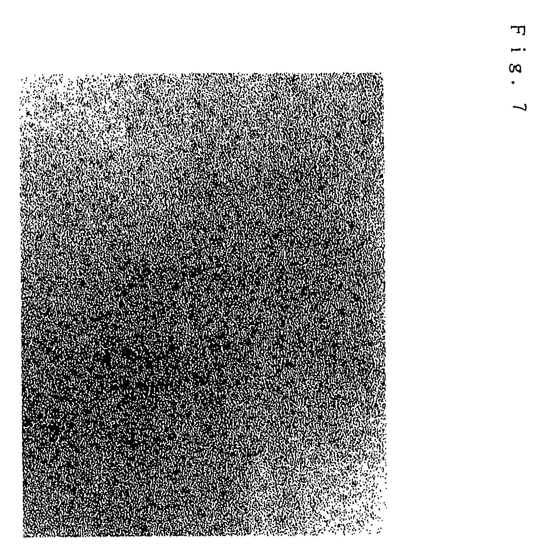

A transmission electron microscope H 7100 FA (supplied by Hitachi, Ltd.) was used. A sample was immersed in super pure water for one day. After removing water attached to the surface of the sample with filter paper, the sample was embedded in a visible light curing acrylic resin D-800 (manufactured by Toagosei Co., Ltd.) and stained for creating contrast between a hydrophilic region and a hydrophobic region. The cured resin block was trimmed, cut to make the sample show up, and sliced to prepare an ultrathin section with an ultramicrotome equipped with a diamond knife. The thus prepared specimen was observed under the transmission electron microscope. Fig. 7 shows the results of observation.

Preparation and evaluation of electrode and MEA:

EXAMPLE 3 (Coating electrode with electrolyte)

Each of the Pt-on-porous carbon membrane structures prepared in Reference Examples 1 and 2 was immersed in each of the polymer electrolyte solutions prepared in Examples 1 and 2 put in a glass petri dish. The petri dish was closed with its cover, and the system was allowed to dry through slow evaporation of the solvent to give an electrolyte membrane-coated gas diffusion electrode of the present invention for use in fuel cells. As a result of SEM observation and electron probe microanalysis (EPMA), all the gas diffusion electrodes prepared were found to be uniformly coated with a thin film of the electrolyte.

The resulting electrodes were immersed in boiling pure water at 80 to 100°C for 1 to 3 hours and dried. The thus treated electrodes were analyzed with an X-ray photoelectron spectroscope (XPS) to examine the elemental composition and chemical bonding at the surface. As a result, no change was observed in the elemental composition and chemical bonding between before and after the hot water treatment that was the same condition as in operation of a fuel cell, proving the coating electrolyte satisfactory in adhesion and stability.

A commercially available Nafion membrane was sandwiched between a pair of the resulting electrodes and bonded together using a hot press to prepare a polymer electrolyte membrane/gas diffusion electrode assembly (MEA) according to the present invention. The electrodes and the membrane showed satisfactory adhesion, and all the fuel cells fabricated by using the MEA exhibited satisfactory cell performance as shown in Table 2 below.

COMPARATIVE EXAMPLE 2

Coating of each of the Pt-on-porous carbon membrane structures prepared in Reference Examples 1 and 2 with an electrolyte membrane was attempted in the same manner as in Example 3, except for replacing the polymer electrolyte solution used in Example 3 with a commercially available Nation 5012 solution. The Nafion 5012 solution failed to homogeneously penetrate inside the structure due to capillarity only to form a thick film on the surface of the structure. When the resulting electrodes were immersed in water, separation, dissolution or disintegration of the electrolyte membrane occurred.

The XPS analysis revealed a remarkable reduction in fluorine element's proportion after the hot water treatment and peaks assigned to a C-O bond and a C-N bond. This indicates that the electrolyte separated to expose the surface of the porous carbon membrane structure.

MEAs prepared using the resulting electrodes were found to have smaller adhesion at the interfaces than those of Example 3. Fuel cells fabricated using these MEAs were inferior in cell performance to those of Example 3 as shown in Table 2.

TABLE 2

|  | Pt-on-Porous Carbon Membrane Structure | Amount of Pt (mg/cm$^2$) | Current Density (mA/cm$^2$, 0.35V) |
|---|---|---|---|
| Example 3 | Ref. Example 1 | 0.02 | 100 |
| Example 3 | Ref. Example 2 | 0.04 | 220 |
| Comp. Example 2 | Ref. Example 1 | 0.02 | 80 |
| Comp. Example 2 | Ref. Example 2 | 0.04 | 150 |

Industrial Applicability:

Use of the polymer electrolyte solution of the present invention provides a polymer electrolyte membrane having high strength and high solvent resistance and makes it possible to form a polymer electrolyte membrane on the surface of a porous carbon substrate. When combined with a porous carbon substrate, the polymer electrolyte solution of the invention provides a three-dimensional site for electrode reaction whereby a solid polymer electrolyte fuel cell realizing a high power generation efficiency per unit area can be obtained.

**Claims**

1. A polymer electrolyte solution **characterized by** comprising a solvent containing a hydrophilic and high-boiling polar solvent, said solvent having dissolved therein a perfluorocarbon sulfonic acid polymer.

2. The polymer electrolyte solution according to claim 1, wherein said solvent is a mixed solvent mainly comprising said hydrophilic and high-boiling polar solvent and water.

3. The polymer electrolyte solution according to claim 2, wherein said mixed solvent contains said hydrophilic and high-boiling polar solvent as a major component and 2.5 to 50% by weight of water.

4. The polymer electrolyte solution according to claim 1, wherein said hydrophilic and high-boiling polar solvent is an aprotic solvent or an ether solvent.

5. The polymer electrolyte solution according to claim 1, wherein said hydrophilic and high-boiling polar solvent is N, N-dimethylformamide.

6. The polymer electrolyte solution according to claim 2, wherein said mixed solvent contains said hydrophilic and high-boiling polar solvent and water at a polar solvent/water ratio of 40/1 to 1/2.

7. The polymer electrolyte solution according to claim 1, wherein the concentration of said perfluorocarbon sulfonic acid polymer is 0.5 to 30% by weight.

8. The polymer electrolyte solution according to claim 1, which is used to fabricate a gas diffusion electrode of a fuel cell.

9. A polymer electrolyte membrane prepared by using the polymer electrolyte solution according to claim 1.

10. The polymer electrolyte membrane according to claim 9, which is infusible and insoluble in water and alcohols.

11. A gas diffusion electrode for a polymer electrolyte fuel cell **characterized by** comprising a structure made of a porous carbon substrate having fine metal particles dispersed therein, the structure having the surface thereof coated with a polymer electrolyte membrane prepared from the polymer electrolyte solution according to claim 1.

12. The gas diffusion electrode for a polymer electrolyte fuel cell according to claim 11, wherein said fine metal particles are fine noble metal particles.

13. A gas diffusion electrode for a polymer electrolyte fuel cell **characterized by** being prepared by using carbon powder or carbon fiber, fine metal particles, and the polymer electrolyte solution according to claim 1.

14. The gas diffusion electrode for a polymer electrolyte fuel cell according to claim 13, wherein said fine metal particles are fine noble metal particles.

15. A polymer electrolyte membrane/gas diffusion electrode assembly **characterized by** being prepared by using the gas diffusion electrode for a polymer electrolyte fuel cell according to claim 11.

16. A polymer electrolyte membrane/gas diffusion electrode assembly **characterized by** being prepared by using the gas diffusion electrode for a polymer electrolyte fuel cell according to claim 13.

17. A fuel cell **characterized by** having the polymer electrolyte membrane/gas diffusion electrode assembly according to claim 15 as a constituent element.

18. A fuel cell **characterized by** having the polymer electrolyte membrane/gas diffusion electrode assembly according to claim 16 as a constituent element.

Fig. 1

Fig. 2

Fig. 3

Fig. 4

NONE          SEI     10 0kV  X200.000  100nm  WD 16 1mm

Fig. 5

Fig. 6

F i g . 7

# EP 1 447 816 A1

## INTERNATIONAL SEARCH REPORT

| | International application No. |
|---|---|
| | PCT/JP02/11004 |

**A. CLASSIFICATION OF SUBJECT MATTER**
    Int.Cl$^7$ H01B1/06, H01M8/02, 4/86, 8/10

According to International Patent Classification (IPC) or to both national classification and IPC

**B. FIELDS SEARCHED**

Minimum documentation searched (classification system followed by classification symbols)
    Int.Cl$^7$ H01B1/06, H01M8/02, 4/86, 8/10

Documentation searched other than minimum documentation to the extent that such documents are included in the fields searched
| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 98/55534 A2 (Hoechst Research & Technology Deutschland GmbH & Co. KG),<br>10 December, 1998 (10.12.98),<br>Full text<br>& EP 986600 A2      & JP 2002-503272 A<br>& US 6348516 B1 | 1–10<br>11–18 |
| X<br><br>Y | JP 2001-126739 A (Asahi Glass Co., Ltd.),<br>11 May, 2001 (11.05.01),<br>Full text<br>(Family: none) | 1–4,6–8,<br>13–14,16,18<br>5,9–12,15,17 |
| X<br><br>Y | JP 2001-160400 A (Asahi Glass Co., Ltd.),<br>12 June, 2001 (12.06.01),<br>Full text<br>(Family: none) | 1–4,6–8,<br>13–14,16,18<br>5,9–12,15,17 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 January, 2003 (28.01.03) | 12 February, 2003 (12.02.03) |

| Name and mailing address of the ISA/<br>    Japanese Patent Office | Authorized officer |
|---|---|
| Facsimile No. | Telephone No. |

Form PCT/ISA/210 (second sheet) (July 1998)

18

## INTERNATIONAL SEARCH REPORT

| International application No. |
|---|
| PCT/JP02/11004 |

**C (Continuation). DOCUMENTS CONSIDERED TO BE RELEVANT**

| Category* | Citation of document, with indication, where appropriate, of the relevant passages | Relevant to claim No. |
|---|---|---|
| X | WO 00/38261 A1 (David Systems Technology S.L.), | 1,4-5,7-8, |
|  | 29 June, 2000 (29.06.00), | 13-14,16,18 |
| Y | Claims; page 18, line 19 to page 19, line 26; | 9-12,15,17 |
| A | page 22, line 15 to page 24, line 2 | 2-3,6 |
|  | & EP 1176655 A1         & JP 2002-533877 A |  |
|  |  |  |
| X | JP 61-295387 A (Japan Storage Battery Co., Ltd.), | 1,4,6-8 |
| Y | 26 December, 1986 (26.12.86), | 9-18 |
| A | Claims; page 2, upper left column, lines 12 to 15 | 2-3,5 |
|  | (Family: none) |  |
|  |  |  |
| Y | JP 11-116679 A (Sumitomo Chemical Co., Ltd.), | 9-10 |
|  | 27 April, 1999 (27.04.99), |  |
|  | Claims |  |
|  | (Family: none) |  |
|  |  |  |
| Y | JP 9-92303 A (Aisin Seiki Co., Ltd.), | 11-18 |
|  | 04 April, 1997 (04.04.97), |  |
|  | Full text |  |
|  | (Family: none) |  |

Form PCT/ISA/210 (continuation of second sheet) (July 1998)

## INTERNATIONAL SEARCH REPORT

| International application No. |
|---|
| PCT/JP02/11004 |

**Box I    Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

   (see extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

   ☐    No protest accompanied the payment of additional search fees.

Form PCT/ISA/210 (continuation of first sheet (1)) (July 1998)

| **INTERNATIONAL SEARCH REPORT** | International application No. |
| --- | --- |
| | PCT/JP02/11004 |

Continuation of Box No.II of continuation of first sheet(1)

Where a group of inventions is claimed, the requirement of unity of invention shall be fulfilled only when there is a special technical feature which links the group of inventions so as to form a single general inventive concept. Inventions according to claims 1 to 10, claims 11 to 12, 15 and 17, claims 13 to 14, 16 and 18 are found to be linked in a matter that a perfluorocarbonsulfonic acid resin is dissolved in a polar solvent being hydrophilic and having a high boiling point. The matter is, however, is described in prior art documents, for example,

document 1: WO 98/55534 A2 (HOECHST RESEARCH & TECHNOLOGY DEUTSCHLAND GMBH & CO. KG 1998. 12. 10, whole the document, & EP 986600 A2 & JP 2002-503272 A & US 6348516 B1,

document 2: JP 2001-126739 A (Asahi Glass Co., Ltd) 2001. 05. 11, whole the document (no family),

document 3: JP 2001-160400 A (Asahi Glass Co., Ltd) 2001. 06. 12, whole the document (no family),

document 4: WO 00/38261 A1 (DAVID SYSTEMS TECHNOLOGY S.L.) 2000. 06. 29, claims, page 18, line 19 to page 19, line 26, page 22, line 15 to page 24, line 2, & EP 1176655 A1 & JP 2002-533877 A, and

document 5: JP 61-295387 A (Japan Storage Battery Co.,Ltd) 1986. 12. 26, claims, page 2, upper left column, line 12 to 15 (no family), and therefore, can not be a special technical feature.

Accordingly, there is no special technical feature between inventions according to claims 1 to 10, those according to claims 11 to 12, 15 and 17, and those according to claims 13 to 14, 16 and 18, which links them so as to form a single general inventive concept. It is clear that a group of inventions described in claims 1 to 18 does not comply with the requirement of unity of invention.

As a result, the claims of this international application describes three inventions classified into claims 1 to 10, claims 11 to 12, 15 and 17, and claims 13 to 14, 16 and 18.